# DEMANDE DE BREVET EUROPEEN

(11) **EP 1 266 873 A1**
(43) Date de publication de la demande: **18.12.2002**
(21) Numéro de dépôt: 02291440.2
(22) Date de dépôt: 11.06.2002
(51) Int. Cl.: C03C 8/02, C03C 8/06

(54) **Frittes de verre destinées à la décoration de la vaisselle de consommation en verre, vitrocéramique et en céramique**

(30) Priorité: 15.06.2001 FR 0107850
(71) Demandeur: dmc2 France Degussa Metaux Catalyseurs CERDEC, 87011 Limoges Cedex (FR)
(72) Inventeur: Laronze, Hervé, 87100 Limoges (FR); Moreau, Sébastien, 87100 Limoges (FR); Chazat, Cécile, 87000 Limoges (FR); Claus, Michel, 87110 Solignac (FR)
(74) Mandataire: Cabinet HERRBURGER

(57) **Abrégé**

Frittes de verre non toxiques à base de borosilicates plus particulièrement destinées à la décoration de la vaisselle de consommation en verre, en vitrocéramique et en céramique, dépourvues de constituants à base de plomb, de cadmium, de zinc et de baryum et présentant une excellente résistance aux attaques acides et en particulier à l'acide citrique et une bonne stabilité vis-à-vis des détergents alcalins, et de préférence un point de ramollissement inférieur à 550°C, caractérisées en ce qu'elles renferment en proportion molaire :

| | |
|---|---|
| 15 à 60 % | de SiO₂ |
| 10 à 30 % | de B₂O₃ |
| 0,1 à 20 % | de A₂O et/ou de AF, A représentant un métal alcalin, et |
| 0,1 à 30 % | de Nb₂O₅ |

et en ce qu'elles sont essentiellement dépourvues de constituants à base d'aluminium, de bismuth et de cobalt.

## Description

La présente invention concerne des frittes de verre non toxiques à base de borosilicates plus particulièrement destinées à la décoration de la vaisselle de consommation en verre, en vitrocéramique et en céramique et dépourvues de constituants à base de plomb, de cadmium, de zinc et de baryum.

Pour l'émaillage et la décoration de la vaisselle de consommation en verre, en vitrocéramique et en céramique, les frittes de verre sont nécessaires. Celles-ci sont mélangées le cas échéant avec un ou plusieurs pigment(s) coloré(s), appliquées sur le support et cuites à des températures de l'ordre de 550 à 750°C.

De plus, et notamment dans le cas particulier de la décoration de vaisselle en verre, les frittes de verre doivent manifester un point de ramollissement suffisamment bas, de préférence inférieur à 550°C pour que le support ne risque pas de se déformer lors de l'étape de cuisson.

Pour satisfaire à cet impératif, on a pendant longtemps utilisé des frittes de verre contenant des quantités importantes d'oxyde de plomb et souvent aussi d'oxyde de cadmium, d'oxyde de zinc et/ou d'oxyde de baryum.

Ces constituants qui risquent toujours d'être extraits par mise en solution notamment dans l'eau bouillante ou encore suite à des attaques acides ou par des détergents alcalins présentent cependant l'inconvénient d'être toxiques, ce qui fait que leur utilisation doit être évitée.

On a donc besoin pour l'émaillage et la décoration de la vaisselle ménagère de frittes de verre non toxiques ayant un point de ramollissement suffisamment bas et parallèlement une bonne stabilité vis-à-vis des attaques par des agents chimiques.

Or, la combinaison de ces propriétés est très difficile à obtenir vu que les frittes de verre ayant une température de ramollissement basse sont souvent instables aux agents chimiques et vice versa.

Pour parvenir au but recherché, on a déjà proposé, conformément à la publication EP-0 294 502 des frittes de verre non toxiques se composant essentiellement en proportion pondérale de 20 à 40 % de SiO₂, 18 à 45 % de ZrO₂, 15 à 30 % de B₂O₃ et 9 à 15 % de Li₂O.

On a pu vérifier que de telles frittes de verre satisfont globalement aux impératifs susmentionnés et présentent en particulier une bonne stabilité vis-à-vis des détergents alcalins, notamment au lave-vaisselle. Leur résistance aux attaques acides peut toutefois être jugée insuffisante.

L'invention a pour objet de remédier à cet inconvénient en proposant des frittes de verre non toxiques à base de borosilicates qui sont dépourvues de constituants à base de plomb, de cadmium, de zinc et de baryum, et qui présentent une excellente résistance aux attaques acides, en particulier à l'acide citrique, notablement supérieure à la stabilité aux acides des frittes de verre existantes, ce tout en conservant une bonne stabilité vis-à-vis des détergents alcalins et un point de ramollissement convenable pour l'application.

Selon l'invention, ce but a pu être atteint grâce à des frittes de verre caractérisées en ce qu'elles renferment en proportion molaire :

| | |
|---|---|
| 15 à 60 % | de SiO₂ |
| 10 à 30 % | de B₂O₃ |
| 0,1 à 20 % | de A₂O et/ou de AF, A représentant un métal alcalin, et |
| 0,1 à 30 % | de Nb₂O₅ |

et en ce qu'elles sont essentiellement dépourvues de constituants à base d'aluminium, de bismuth et de cobalt.

On a pu constater que la présence d'une proportion notable d'oxyde de niobium permet d'améliorer de façon drastique la résistance aux acides de la vaisselle de consommation en verre, en vitrocéramique et en céramique ainsi décorée ce sans affecter sa résistance au lave-vaisselle.

Le coefficient de dilation de ces frittes de verre, mesuré entre 30 et 300°C, se situe entre 72 et 87.10⁻⁷°K⁻¹ et est par conséquent bien adapté au support.

Selon une caractéristique préférentielle de l'invention, les frittes de verre renferment en outre en proportion molaire 0,1 à 16 % de ZrO₂ qui permet d'améliorer la résistance aux attaques par des détergents alcalins de la vaisselle décorée.

Selon une autre caractéristique particulièrement avantageuse de l'invention, les frittes de verre renferment également en proportion molaire 0, 1 à 5 % de TiO₂ qui renforce la stabilité vis-à-vis des acides de la vaisselle décorée.

La production de ces frittes de verre s'effectue par fusion de leurs différents constituants entre 1 000 et 1 400°C, trempe dans l'eau et broyage mécanique.

Ces frittes de verre conviennent remarquablement bien à la décoration de vaisselle de consommation en verre, en vitrocéramique et en céramique car elles ont une excellente résistance aux acides et spécialement à l'acide citrique et une très bonne résistance aux détergents alcalins en particulier au lave-vaisselle.

Les exemples 1 à 3 ci-dessous mentionnent à titre d'exemples non limitatifs trois exemples de composition de frittes de verre conformes à l'invention, en proportion molaire, qui se sont avérées particulièrement avantageuses :

| ***Exemple 1*** | |
|---|---|
| SiO₂ | 40,55 % |
| B₂O₃ | 20,75 % |
| TiO₂ | 2,13 % |
| Li₂O | 18,10 % |
| LiF | 7,17 % |
| ZrO₂ | 6,68 % |
| Nb₂O₅ | 4,62 %, |

| ***Exemple 2*** | |
|---|---|
| SiO₂ | 40,55 % |
| B₂O₃ | 20,75 % |
| TiO₂ | 2,13 % |
| Li₂O | 18,10 % |
| LiF | 7,17 % |
| Nb₂O₅ | 11,30 %. |

| ***Exemple 3*** | |
|---|---|
| SiO₂ | 40,55 % |
| B₂O₃ | 20,75 % |
| TiO₂ | 2,13 % |
| Li₂O | 18,10 % |
| LiF | 7,17 % |
| ZrO₂ | 3,30 % |
| Nb₂O₅ | 8,00 %. |

Pour vérifier la résistance à l'acide citrique à 10 % d'une fritte de verre selon l'invention, on a effectué le test suivant :

On a appliqué par sérigraphie une fritte de verre ayant une composition conforme à l'exemple 1 sur un support vitreux puis on l'a chauffé à 630°C.

Après cuisson, on a déposé à la surface du support ainsi émaillé, à température ambiante, quelques gouttes d'une solution d'acide citrique à 10 % de manière à former une grosse goutte que l'on a ensuite recouverte d'un verre de montre pour éviter toute évaporation.

Après 15 minutes, on a lavé à l'eau et essuyé la surface ayant été exposée à la solution d'acide citrique et on l'a examinée.

L'évaluation effectuée n'a montré aucune attaque apparente : ainsi, sur une échelle allant de 1 (pas d'attaque apparente) à 7 (suppression totale du dépôt d'émail), la fritte de verre s'est située au niveau 1.

## Revendications

1. Frittes de verre non toxiques à base de borosilicates plus particulièrement destinées à la décoration de la vaisselle de consommation en verre, en vitrocéramique et en céramique, dépourvues de constituants à base de plomb, de cadmium, de zinc et de baryum et présentant une excellente résistance aux attaques acides et en particulier à l'acide citrique et une bonne stabilité vis-à-vis des détergents alcalins, et de préférence un point de ramollissement inférieur à 550°C,
**caractérisées en ce qu'**
elles renferment en proportion molaire :
| | |
|---|---|
| 15 à 60 % | de SiO₂ |
| 10 à 30 % | de B₂O₃ |
| 0,1 à 20 % | de A₂O et/ou de AF, A représentant un métal alcalin, et |
| 0,1 à 30 % | de Nb₂O₅ |
et **en ce qu'**elles sont essentiellement dépourvues de constituants à base d'aluminium, de bismuth et de cobalt.

2. Frittes de verre selon la revendication 1,
**caractérisées en ce qu'**
elles renferment en proportion molaire 0,1 à 16 % de ZrO₂.

3. Frittes de verre selon l'une quelconques des revendications 1 et 2,
**caractérisées en ce qu'**
elles renferment en proportion molaire 0,1 à 5 % de TiO₂.

4. Frittes de verre selon l'une quelconques des revendications 1 à 3,
**caractérisées en ce qu'**
elles ont essentiellement la composition suivante en proportion molaire :
| | |
|---|---|
| SiO₂ | 40,55 % |
| B₂O₃ | 20,75 % |
| TiO₂ | 2,13% |
| Li₂O | 18,10% |
| LiF | 7,17% |
| ZrO₂ | 6,68 % |
| Nb₂O₅ | 4,62 %, |

5. Frittes de verre selon l'une quelconque des revendications 1 à 3,
**caractérisées en ce qu'**
elles ont essentiellement la composition suivante en proportion molaire :
| | |
|---|---|
| SiO₂ | 40,55 % |
| B₂O₃ | 20,75 % |
| TiO₂ | 2,13 % |
| Li₂O | 18,10 % |
| LiF | 7,17 % |
| Nb₂O₅ | 11,30 %. |

6. Frittes de verre selon l'une quelconques des revendications 1 à 3,
**caractérisées en ce qu'**
elles ont essentiellement la composition suivante en proportion molaire :
| | |
|---|---|
| SiO₂ | 40,55 % |
| B₂O₃ | 20,75 % |
| TiO₂ | 2,13 % |
| Li₂O | 18,10 % |
| LiF | 7,17 % |
| ZrO₂ | 3,30 % |
| Nb₂O₅ | 8,00 %. |
